(19) Europäisches Patentamt

European Patent Office

Office européen des brevets

(11) **EP 1 523 632 B1**

(12) **FASCICULE DE BREVET EUROPEEN**

(45) Date de publication et mention
de la délivrance du brevet:
**22.03.2006 Bulletin 2006/12**

(21) Numéro de dépôt: **03750818.1**

(22) Date de dépôt: **17.07.2003**

(51) Int Cl.:
***F16H 61/02*** *(2006.01)*

(86) Numéro de dépôt international:
**PCT/FR2003/002266**

(87) Numéro de publication internationale:
**WO 2004/010031 (29.01.2004 Gazette 2004/05)**

(54) **PROCEDE ET DISPOSITIF DE COMMANDE D UNE TRANSMISSION AUTOMATIQUE EQUIPANT UN VEHICULE EN SITUATION DE MONTEE**

STEUERVERFAHREN UND STEUERVORRICHTUNG EINES AUTOMATIKGETRIEBES IN EINEM FAHRZEUG BEI FAHRBAHNSTEIGUNG

METHOD AND DEVICE FOR AUTOMATIC TRANSMISSION CONTROL EQUIPPING A VEHICLE IN UPHILL SITUATION

(84) Etats contractants désignés:
**DE ES GB IT**

(30) Priorité: **18.07.2002 FR 0209113**

(43) Date de publication de la demande:
**20.04.2005 Bulletin 2005/16**

(73) Titulaire: **Renault s.a.s.**
**92100 Boulogne Billancourt (FR)**

(72) Inventeur: **TAFFIN, Christian**
**F-78320 Le Mesnil Saint Denis (FR)**

(56) Documents cités:
**WO-A-97/06374          US-A- 4 312 249**
**US-A- 5 738 605          US-A- 5 765 117**

**Description**

La présente invention concerne un procédé de commande d'une transmission automatique équipant un véhicule en situation de montée. Elle concerne aussi un dispositif de commande d'une transmission automatique équipant un véhicule en situation de montée.

Dans le cadre de l'intention, une transmission automatique transforme le point de fonctionnement (régime, couple) du moteur thermique à la sortie duquel elle est mécaniquement couplée en un état dynamique à la roue, déterminant un couple à la roue et une vitesse de déplacement du véhicule, de sorte que soit déterminé le comportement, dynamique du véhicule. La transmission automatique permet sous la commande d'un calculateur spécifique de déterminer le rapport de transmission adapté à une situation de roulage selon des conditions prédéterminées.

Particulièrement, une transmission automatique peut comporter une boîte de vitesses à rapports étagés de sorte que le calculateur spécifique puisse commander un changement de rapport de boîte ou vitesse qui entraîne une augmentation ou une réduction discontinues du rapport de transmission. Lorsque le véhicule se trouve en situation de montée, la transmission automatique commande de manière erratique une succession de changements de rapports de boîte de sorte que le véhicule ne fonctionne pas de manière correcte, ce qui a été dénommé phénomène de pompage.

Dans l'état de la technique, une solution a consisté à interdire le passage sur une vitesse supérieure quand une telle situation de pompage a été détecté. Mais, cette solution ne permet plus alors de bénéficier de toute la souplesse d'une transmission automatique tant que le calculateur ne détermine pas qu'une condition de fin d'inhibition est réalisée.

Pour porter remède aux inconvénients de ce type de solutions, le même demandeur a déjà décrit un procédé de suppression du phénomène de pompage dans un brevet FR-B-2.737.761.

Dans ce procédé de suppression, une première étape consiste à estimer la masse du véhicule, le rapport de transmission, le régime du moteur thermique ainsi que l'angle d'ouverture du papillon d'admission.

Dans une seconde étape, on réalise l'estimation de l'accélération du véhicule en fonction de la masse estimée du véhicule et d'un futur changement de rapport de transmission supérieur.

Dans une troisième étape, on détermine une estimation des pertes lors du mouvement estimé dans le rapport supérieur.

Dans une quatrième étape, on exécute une estimation de la possibilité de pompage lors du passage au rapport supérieur de sorte que soit générée une interdiction au passage supérieur si la possibilité de pompage a été estimée.

Dans un autre brevet FR-B-2.801.952, le même demandeur a décrit un procédé de commande de transmission automatique en fonction du profil de la route qui permet notamment d'éviter aussi le phénomène de pompage. Cette solution est adaptée à une transmission automatique comportant, en sortie du moteur thermique, un convertisseur de couple associé à un mécanisme de changement de vitesses, par exemple, à train épicycloïdal.

Le procédé décrit dans cet état de la technique consiste à exécuter une mesure du couple moteur, à estimer la pente de la route et à la comparer à un seuil de façon à imposer à la transmission automatique une loi de passage adaptée aux montées, ou une loi de passage adaptée aux autres profils de route.

Néanmoins, des problèmes de fonctionnement subsistent lors d'une situation de montée, quand on applique les enseignements de l'un ou l'autre de ces deux brevets.

En effet, dans le brevet FR-B-2.737.761 , l'estimation de l'accélération du véhicule sur le rapport montant, a (N+1), est effectuée à partir d'une information de couple moteur $C_{mot}$ déterminée au moyen d'une mémoire de cartographie de couple moteur qui ne permet pas de prendre en compte d'autres causes de variations de couple moteur liées par exemple à l'altitude.

Dans le brevet FR-B-2.801.952, les changements de rapports de boîte spécifiques aux situations de montée sont figés dans une mémoire de cartographie de changements de rapports qui n'est pas optimisée en déhors d'une plage de pentes de route données. Cette solution ne permet donc pas de répondre à l'ensemble des cas de roulage en montée.

La présente invention a pour but de proposer une solution visant à résoudre l'ensemble des problèmes évoqués ci-dessus et pour tous types de transmission automatique.

Le procédé de l'invention consiste à :

- d'une première part :

  - acquérir une valeur de mesure du couple moteur et urie valeur représentative du rapport de transmission ; puis
  - exécuter une estimation de l'accélération du véhicule sur une valeur supérieure de rapport de transmission; puis
  - exécuter un test sur la possibilité d'une augmentation du rapport de transmission ;

- d'une seconde part :

  - acquérir au moins une valeur de paramètres représentatifs de l'environnement dynamique du véhicule comprenant une valeur représentative de la vitesse de déplacement du véhicule, une valeur représentative du degré d'enfoncement de la pédale d'accélérateur ; puis

- exécuter une estimation de réduction de rapport pour déterminer s'il existe une valeur possible de réduction du rapport de transmission et pour produire au moins une telle valeur si elle existe ; et

- d'une troisième part :

  - dans le cas où le test sur la possibilité d'une augmentation du rapport de transmission est positif, commander une augmentation de rapport de transmission ou, dans le cas contraire, et l'estimation de réduction de rapport est positive, à commander une réduction du rapport de transmission, comme un rapport de boîte dé vitesses.

L'invention concerne aussi un dispositif de commande de transmission automatique comportant un moyen pour détecter de la valeur en cours du rapport de transmission et un moyen pour augmenter ou réduire la valeur en cours du rapport de transmission dans laquelle un moyen permet de mesurer le couple moteur effectivement produit à chaque instant.

Le dispositif de l'invention comporte essentiellement un estimateur d'une valeur d'accélération sur une valeur supérieure à la valeur en cours du rapport de transmission, un moyen de test de possibilité d'augmentation de la valeur en cours du rapport de transmission, un moyen de test d'une estimation de réduction de la valeur en cours du rapport de transmission, un circuit générateur d'une incrémentation ou d'une décrémentation de rapport de transmission en situation de montée.

D'autres caractéristiques et avantages de la présente invention seront mieux compris à l'aide de la description des figures annéxées :

- la figure 1 : un schéma bloc d'un véhicule équipé d'un dispositif mettant en oeuvre le procédé de l'invention ;
- la figure 2 : un graphique représentant une situation de pompage, notamment en situation de montée ;
- la figure 3 : un organigramme du procédé de l'invention dans un mode de réalisation préféré ;
- la figure 4 : un diagramme d'état du fonctionnement du dispositif mettant en oeuvre le procédé de l'invention;
- la figure 5 : un schéma bloc d'une application particulière du dispositif de la figure 4 ;
- la figure 6 : un schéma bloc d'une partie du dispositif de la figure 4 ;
- la figure 7 : un schéma bloc d'une partie du dispositif de la figure 4 ;
- la figure 8 : un schéma bloc d'une partie du dispositif de la figure 4 ;
- la figure 9 : un schéma bloc d'une partie du dispositif de la figure 4 ;
- la figure 10 : un graphique expliquant le positionnement relatif de deux seuils mis en oeuvre dans le dispositif de la figure 10.
- la figure 11 : un schéma bloc d'une partie du dispositif de la figure 4.

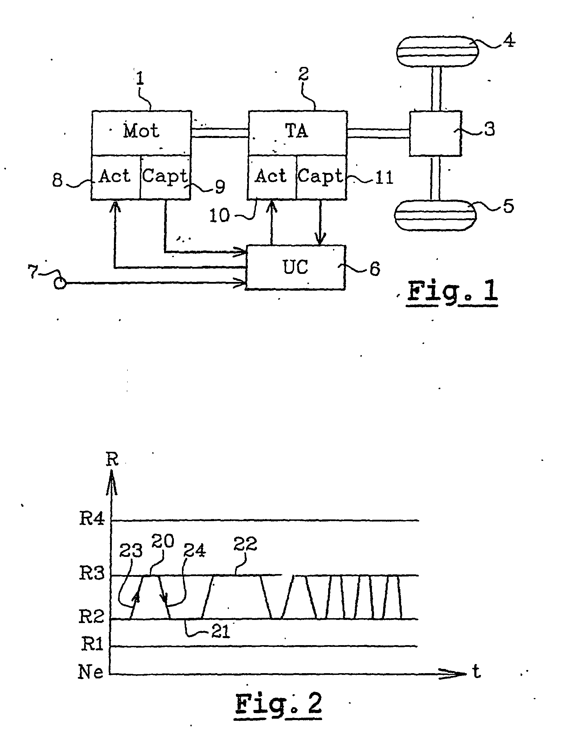

A la figure 1, on a représenté un schéma bloc d'un véhicule incorporant un dispositif de mise en oeuvre du procédé de l'invention.

Le véhicule est équipé d'un groupe motopropulseur composé d'un moteur 1 et d'une transmission automatique 2. Le moteur thermique 1 comporte un arbre de sortie qui tourne à une vitesse de rotation, appelée régime Nm, et fournit un couple dit couple moteur Cm. L'arbre de sortie du moteur est connecté mécaniquement à un moyen d'entrée de la transmission automatique 2 dont l'arbre de sortie est couplé par un différentiel 3 aux roues motrices 4 et 5 du véhicule et fournit à celle-ci un couple de sortie de transmission Cr sous une vitesse de rotation de valeur Nr, déterminée par le rapport de transmission, défini comme le rapport $K = Nr/Nm$.

Le véhicule comporte un calculateur de bord qui est connecté à un ensemble de capteurs 7 d'environnement du véhicule, ainsi qu'à des capteurs spécifiques 9 de l'état de fonctionnement de l'état du moteur, et des capteurs spécifiques 11 de l'état de fonctionnement de la transmission automatique. Dans le cas de l'invention, les capteurs 9 comportent un capteur du couple moteur Cm réellement produit par le moteur 1 et -les capteurs 11 comportent un capteur d'une grandeur représentative du rapport de transmission en cours sur la transmission automatique 2.

Le calculateur de bord incorpore le dispositif de mise en oeuvre de l'invention et produit des signaux à destination d'actionneurs 8 du moteur thermique 1 et d'actionneurs 10 spécifiques à la transmission automatique 2. Il en résulte que le point de fonctionnement (Nm, Cm) du moteur et le rapport de transmission K de la transmission automatique sont à chaque instant déterminés selon la mise en oeuvre du procédé de l'invention.

A la figure 2, on a représenté un diagramme du fonctionnement d'une transmission automatique à rapports étagés lors d'une situation de montée. La transmission automatique 2 est initialement dans un rapport de vitesses sur le rapport R2.

Du fait de la pente, le moteur 1 produit un couple moteur Cm plus élevé que celui déterminé pour un fonctionnement à plat à un régime moteur Nm donné, et la commande de la transmission automatique 2 détermine alors une montée ou incrémentation de rapport 23 de sorte que la transmission automatique à boîte de vitesses à rapports étagés passe sur le rapport ou vitesse R3 supérieur.

Dans le cas du phénomène de pompage lors d'une situation de montée, une décrémentation 24 de rapport de vitesses est rapidement provoquée et une succession de changements de rapport 21, 22 de manière erratique'apparaît alors, ce qui est préjudiciable au bon fonctionnement du véhicule.

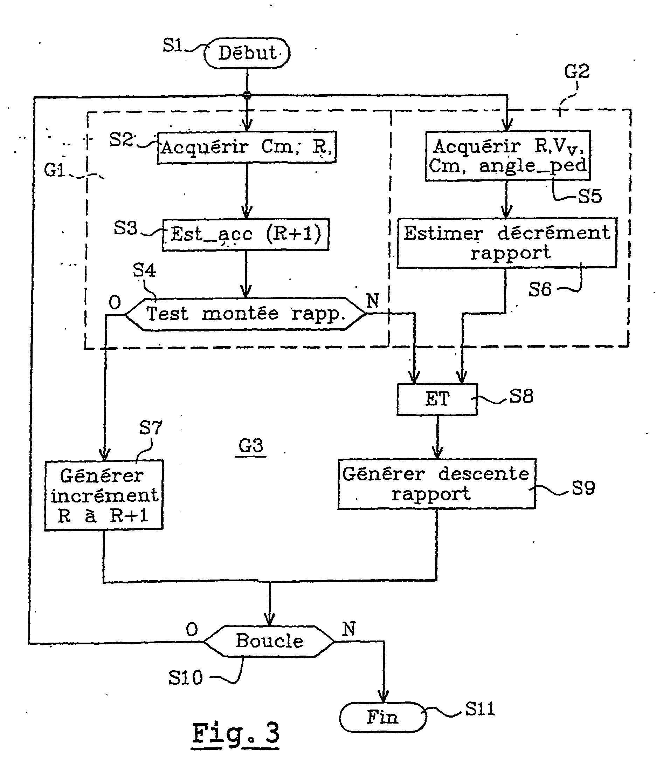

Le procédé de l'invention, ainsi qu'il est décrit à la Figure 3, permet d'empêcher le phénomène de pompage sans rencontrer les inconvénients de l'état de la technique détaillé ci-dessus.

Lors d'une étape S1 de début de procédé de commande de la transmission automatique 2, un certain nombre de paramètre qui seront décrits plus tard sont initialisés.

Deux procédures sont alors exécutées :

- une procédure G1 qui permet de produire un signal représentatif de la possibilité d'une incrémentation du rapport de transmission ; et
- une procédure G2 qui permet de produire un signal représentatif de la possibilité d'une décrémentation du rapport de transmission.

La procédure G1 comporte une étape S2 au cours de laquelle on réalise l'acquisition d'une mesure du couple moteur Cm produite par exemple par un capteur de couple moteur ou par un estimateur lié au fonctionnement particulier du moteur thermique 1 du véhicule de la figuré 1.

On réalise aussi l'acquisition de la valeur R du rapport de transmission (dans le cas d'une transmission continûment variable, par exemple) ou du rapport de boîte (dans le cas d'une transmission à boîte de vitesses à rapports étagés) sur laquelle la transmission automatique 2 fonctionne à la date d'acquisition.

Lors d'une étape S3, on exécute une estimation $a_{est}(R+1)$ de l'accélération que prendrait le véhicule dans le rapport R+1 immédiatement supérieur au rapport acquis R lors de l'étape S2.

La valeur d'estimation de l'accélération $a_{est}(R+1)$ lors d'un rapport de boîte de vitesses incrémenté est alors testée de façon à décidér s'il est possible de réaliser une incrémentation du rapport de boîte de vitesses sans provoquer le phénomène de pompage.

La procédure G2, qui peut être exécutée en parallèle avec la procédure G1, ou de manière partagée selon la structure logicielle du dispositif de mise en oeuvre du procédé de l'invention, comporte une étape S5 au cours de laquelle on acquière notamment le rapport de boîte de vitesses, la valeur du couple moteur ainsi qu'il a été décrit lors de l'étape S2, une valeur instantanée de la vitesse du véhicule $V_v$, ainsi que le degré d'enfoncement de la pédale de l'accélérateur angle_ped.

On peut acquérir aussi, en fonction des différentes variantes de l'invention qui seront décrits plus loin, d'autres paramètres descriptifs de l'environnement du véhicule comme le degré de pente dans laquelle roule le véhicule ou l'altitude du véhicule ou encore l'indication d'un signal d'activation des freins du véhicule.

Lors d'une étape S6 dans la procédure G2, on estime alors la possibilité d'une décrémentation de rapport.

Dans le cas où le test de l'étape S4 de la procédure G1 est positif, lors d'une étape S7 d'une procédure finale G3, on exécute une incrémentation du rapport qui passe du rapport de boîtes R au rapport de boîtes R+1.

Si le test de l'étape S4 est négatif, et que l'estimation de l'étape S6 de décrémentation de rapport de boîtes de vitesses est positive, on réalise une décrémentation du rapport qui passe du rapport R à un rapport inférieur comme le rapport R-1 ou R-2.

La procédure finale G3 est alors terminée par un test de fin de boucle S10 de sorte qu'une nouvelle période d'acquisition S2 ou S5 est lancée si le test de fin de boucle n'est pas atteint et, dans le cas contraire, une étape de fin de procédure S11 est alors exécutée.

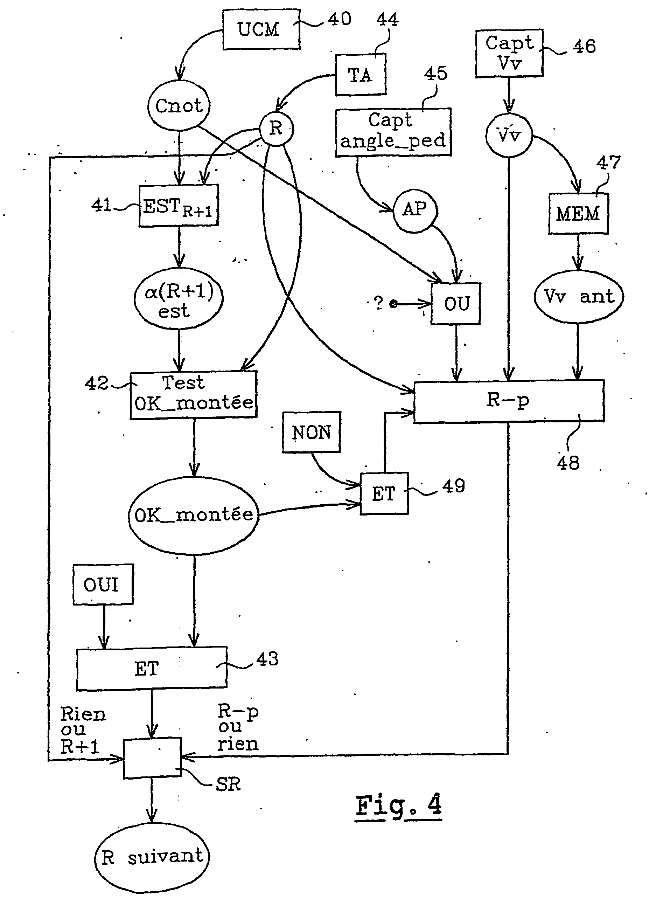

A la figure 4, on a représenté le diagramme de fonctionnement du dispositif de mise en oeuvre du procédé de l'invention.

Un module 40 correspondant à une unité centrale du contrôle du moteur thermique 1 produit une valeur de mesure du couple moteur Cm à chaque instant de l'exécution du procédé de l'invention. On doit comprendre que cette valeur de mesure correspondant à une valeur physiquement mesurée du couple moteur à la différence d'autres réalisations d'état de la technique dans lesquels le couple moteur Cm est simplement estimé sur la base de paramètres extérieurs au mécanisme de production du couple moteur.

Cependant, la valeur de mesure du couple moteur Cm peut recevoir un certain nombre de traitements d'adaptation, notamment un filtrage permettant de réduire les variations parasites sur ses valeurs successives.

Le module de mesure du couple moteur transmet une valeur Cm à une borne d'entrée d'un circuit 41 estimateur de l'accélération du véhicule sur le rapport immédiatement supérieur au rapport en cours.

A cet effet; une seconde borne d'entrée de l'estimateur 41 est connectée à une borne de sortie convenable du module 44 associé à un capteur d'état de la transmission automatique 44 et qui fournit une valeur R du rapport de boîte de vitesses en cours sur la transmission automatique (2 ; Figure 1).

Sur la base de l'estimation de l'accélération, une valeur $a_{est}$(R+1) est transmise à une première borne d'entrée d'un module de test 42 indiquant qu'il est possible de réaliser une incrémentation de rapport de boîte de vitesses sans risque de pompage.

Le module de test 42 comporte une seconde borne d'entrée connectée à la sortie des capteurs de l'état de la transmission automatique (2 ; Figure 1) pour recevoir la valeur en cours R du rapport de boîte.

Le module de test 42 présente une borne de sortie qui est connectée, d'une part, à une entrée d'une porte ET 49 et à une entrée d'une porte ET 43 dont le rôle sera décrit plus loin.

Le dispositif de l'invention comporte ensuite un capteur de mesure de degré d'enfoncement de la pédale d'accélérateur 45 qui produit une valeur numérique AP qui est transmise à une entrée d'un module 48 de test de la possibilité de réaliser une décrémentation du rapport de boîte à une valeur R-p.

Selon les modes de réalisation de l'invention, on peut utiliser concurremment ou séparément l'information AP de degré d'enfoncement de la pédale d'accélérateur ou directement une valeur de couple moteur.

Par ailleurs, le dispositif de l'invention comporte un capteur 46 de la vitesse du véhicule qui produit une valeur Vv qui est transmise, d'une part, à une mémoire 47 de valeurs précédentes ainsi qu'à une entrée du module de test 48 décrit ci-dessus. La mémoire 47 transmet un nombre prédéterminé d'échantillons des mesures précédentes de la vitesse du véhicule à des entrées convenables du module de test 48.

La porte ET'49 présente une seconde borne d'entrée qui est maintenue à une valeur inactive de sorte que lorsque le module de test 42, produit un signal OK_montée_inactive, la porte ET présente un signal actif sur sa borne de sortie qui est connectée à une borne d'entrée de sélection ou d'activation du module 48 de décrémentation de rapports de transmission.

La seconde porte ET 43 présente une seconde borne d'entrée qui est connectée en permanence à une valeur logique active de sorte que la borne de sortie de la porte ET 43 est active seulement si le signal de test ok_montée issue de la sortie de test 42 est actif.

Le dispositif de mise en oeuvre de l'invention dont le fonctionnement est représenté à la figure 4 comporte enfin un module SR qui reçoit la valeur du rapport R et en fonction du signal de sortie de la porte ET 43 produit un signal de commande de rapport de boîte de vitesses qui peut prendre :

- ou bien la valeur R en cours qui est maintenue alors,
- ou bien la valeur de rapport de boîte immédiatement supérieur R+1,
- ou bien enfin une valeur R-p de rapport inférieur.

Le signal de sortie est connecté comme signal de commande aux actionneurs convenables 10 de la transmission automatique 2 (Figure 1).

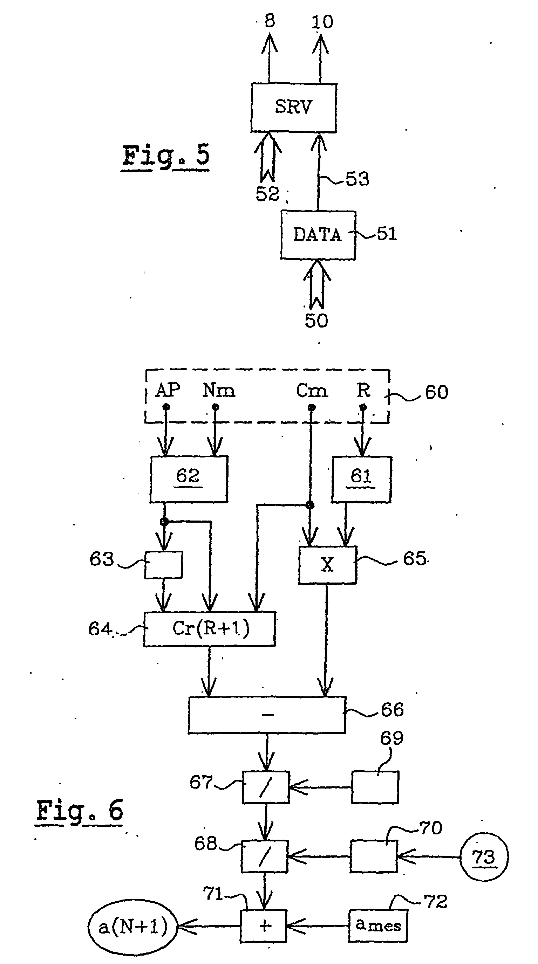

A la figure 5, on a représenté une situation dans laquelle le calculateur de bord 6 est connecté aux actionneurs du groupe motopropulseur 1, 2 par l'intermédiaire d'un automatisme de régulation de vitesse ou d'un automatisme de régulation de distance 54.

Le circuit ou module régulateur SRV 54 comporte une borne d'entrée d'un vecteur de commande 52 ainsi qu'une borne d'entrée 53 de rapport de transmission qui est la sortie du circuit de la figure 4 représenté dans le bloc 51, le bloc 51 recevant aussi un vecteur d'état 50 comportant notamment la mesure du couple moteur Cm, le degré d'enfoncement AP de la pédale d'accélérateur et la valeur Vv de la vitesse du véhicule. D'autres automatismes peuvent être intercalés à la sortie du bloc du dispositif 51.

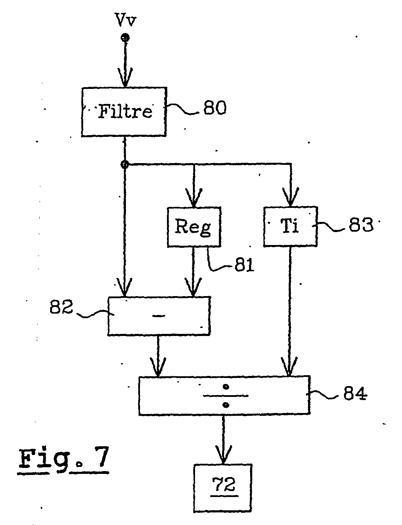

A la figure 6, on a représenté un module d'estimation de l'accélération immédiatement supérieur, comme le bloc 41 de la figure 4.

Selon l'invention, on considère qu'entre deux rapports successifs, l'ensemble FE des forces extérieures appliquées au véhicule sont représentés par un terme additif qui reste constant. Dans cette analyse, M correspond à la masse estimée du véhicule et r au rayon des roues motrices du véhicule et FE le terme dissipatif.

Dans cette hypothèse, l'accélération sur le rapport R peut s'écrire :

$$a(R) = \frac{C_r(R)}{r \cdot} \times \frac{1}{M} + FE$$

Selon l'invention, on considère que l'accélération mesurée selon une procédure qui sera décrite plus loin, correspond exactement à ce terme a(R).

Après le changement de rapport, l'accélération du véhicule prendra la valeur estimée :

$$a(R+1) = \frac{Cr(R+1)}{r} \times \frac{1}{M} + FE$$

En soustrayant les deux relations précédentes l'une de l'autre, il est ainsi possible de supprimer le terme représentatif FE des dissipations d'énergie.
Il vient alors :

$$a_{est}(R+1) - a_{mes} = \frac{Cr(R+1)}{r} \times \frac{1}{M} - \frac{Cr(R)}{r} \times \frac{1}{M}$$

ce qui permet de calculer l'estimation de l'accélération sur le rapport immédiatement supérieur par la relation :

$$\dot{a}_{est}(R+1) = a_{mes} + \frac{1}{M} \frac{Cr(R+1) - Cr(R)}{r}$$

L'un des mérites de l'invention est de permettre de tenir compte d'une manière simple des effets éventuels altimétriques et d'autres dispersions liées au fonctionnement du moteur thermique en se basant sur une valeur de couple moteur réel et non sur des mesures et des estimations compliquées.
Le module 41 de la figuré 4 est détaillé dans un mode particulier de réalisation à la figure 6. Le module 41 reçoit en entrée un vecteur d'état de l'environnement du véhicule 60 qui comporte dans ce mode de réalisation :

une valeur numérique AP indicatif de degré d'enfoncement de la pédale d'accélérateur ;
- Nm l'indication du régime moteur thermique 1 (figure 1) ;
- une valeur Cm d'indication du couple moteur du moteur thermique
- R du rapport de boîte de vitesses de la transmission automatique.

Il est clair que, dans l'ensemble de la présente invention, le rapport de boîte de vitesses R, qui indique donc une transmission à rapports étagés, peut être remplacé dans le cas d'une transmission à variations continues de type CVT ou d'une transmission infiniment variable, directement par le rapport de transmission.
Une première mémoire de cartographie 61 permet en recevant la valeur du rapport de boîte R de produire à sa sortie une valeur de rapport de transmission.
Une seconde mémoire de cartographie 62 reçoit, sur une première borne d'entrée, la valeur AP de degré d'enfoncement de la pédale d'accélérateur ainsi que, sur une seconde borne d'entrée, la valeur Nm représentative du régime moteur.
La sortie de lecture de la mémoire de cartographie 62 présente une valeur du couple moteur calculé Cm_calculé qui a été préalablement chargée lors de l'étape d'initialisation du procédé de l'invention.
La sortie de lecture de la mémoire de cartographie 62 est transmise à une première borne d'entrée d'écriture d'une mémoire 63, ainsi qu'à une borne d'entrée d'un module 64 de calcul de couple à la roue sur le rapport R+1.
En séquence, le dispositif de l'invention permet de réaliser une première valeur de couple moteur calculé pour le rapport R et un angle pédale AP donné ; Cm_calculé(R) = Cm(R, AP).
Cette valeur est alors enregistrée dans la mémoire 63, puis une seconde valeur est calculée de la même manière pour le couple moteur calculé sur le rapport immédiatement supérieur R+1 et cette valeur Cm_calculé(R+1) = Cm(R+1, AP) est transmise à la seconde borne d'entrée du module 64 précité.
Une première borne d'entrée du module 64 est connectée à la sortie de lecture du registre 63, tandis qu'une troisième borne d'entrée du module 64 reçoit une valeur de mesure du couple moteur.
La sortie du module 64 contient une valeur estimée du couple à la roue par rapport à R+1 selon la relation :

$$Cr(N+1) = \left[\frac{Cm}{Cm\_calculé[Nm(R), AP]}\right] \times Cm\_calculé[Nm(R+1), AP] \times K(R+1)$$

expression dans laquelle:

- K(R+1) est le rapport de démultiplication de couple sur le rapport R+1 transmis à la sortie de la mémoire de cartographie 61,
- Cm_calculé correspond aux différentes sorties successives de lecture de la seconde mémoire de cartographie 62.

Un multiplieur 65 reçoit, sur une première borne d'entrée, la valeur en cours de la mesure du couple moteur et, sur une seconde borne d'entrée, la valeur du rapport de transmission de sorte que la borne de sortie du multiplieur 65 produise une valeur représentative du couple à la roue.

Cette valeur est connectée à une valeur d'une seconde borne d'entrée d'un soustracteur 66 dont une première borne d'entrée est connectée à la sortie du module 64 de calcul ou d'estimation du couple à la roue sur le rapport R+1.

La borne de sortie du soustracteur 66 est transmise à une première borne d'entrée de numérateur d'un premier circuit diviseur 67 dont une seconde borne d'entrée de dénominateur est connectée à un registre 68 dans lequel se trouve inscrite la valeur r du rayon des roues motrices.

La borne de sortie du premier diviseur 67 est connectée à une première borne d'entrée de numérateur d'un second circuit diviseur 69 dont la seconde borne d'entrée de dénominateur est connectée à un registre 70 dans laquelle se trouve inscrite la valeur de la masse réelle du véhicule M.

Le registre 70 peut comporter une entrée d'adaptation qui reçoit des valeurs d'un mécanisme pour adapter la masse réelle du véhicule aux situations de roulage par un processus 73 qui sera décrit plus loin.

La sortie du second diviseur 69 est fournie à une première borne d'entrée d'un additionneur 71 dont la seconde borne d'éntrée est connectée à un module de calcul de l'accélération 72.

La borne de sortie de l'additionneur 71 génère la valeur estimée a(R+1) de l'accélération sur le rapport immédiatement supérieur au rapport R en cours.

A la figure 7, on a représenté un mode de réalisation d'un module de calcul de l'accélération sur la base de la vitesse du véhicule Vv produite par un capteur convenable dans le vecteur d'état 60 du dispositif de l'invention.

La valeur instantanée de la vitesse Vv est produite sous la forme d'une succession de valeurs numériques qui sont transmises à une borne d'entrée d'un circuit de filtrage 80 qui peut par exemple réaliser une moyenne glissante sur un nombre prédéterminé d'échantillons.

La valeur de sortie de filtrage est transmise à une première borne d'entrée positive d'un soustracteur 82, ainsi qu'à une borne d'entrée d'un registre 81.

La valeur de filtrage en cours est aussi transmise à une borne d'entrée de détection d'un module 83 permettant de déterminer la période $T_i$ séparant l'arrivée de deux valeurs filtrées de la mesure de la vitesse du véhicule Vv. Dans d'autres modes de réalisation, la période Ti étant fixe, cette disposition est remplacée par un simple registre de la valeur Ti constante.

Le registre 81 présente une sortie de lecture qui est connectée à une seconde borne d'entrée négative du soustracteur 82. On produit ainsi un signal représentatif de l'écart de vitesse Vv(t2) - Vv(t1) entre deux instants t1 et t2 séparés d'une durée $T_i$ =t2-t1.

La valeur d'écart de vitesse Vv(t2) - Vv(t1) de sortie du soustracteur 82 est transmise à une première borne d'entrée de numérateur d'un circuit diviseur 84 dont la seconde borne d'entrée de dénominateur est connectée à une borne de sortie du module de détection 83 qui produit la durée Ti = t2 - t1 en cours séparant les deux valeurs de vitesse Vv(t2) et Vv(t1).

La borne de sortie du circuit diviseur 84 génère un signal de mesure [Vv(t2) - Vv(t1)]/Ti de l'accélération du véhicule à l'instant présent.

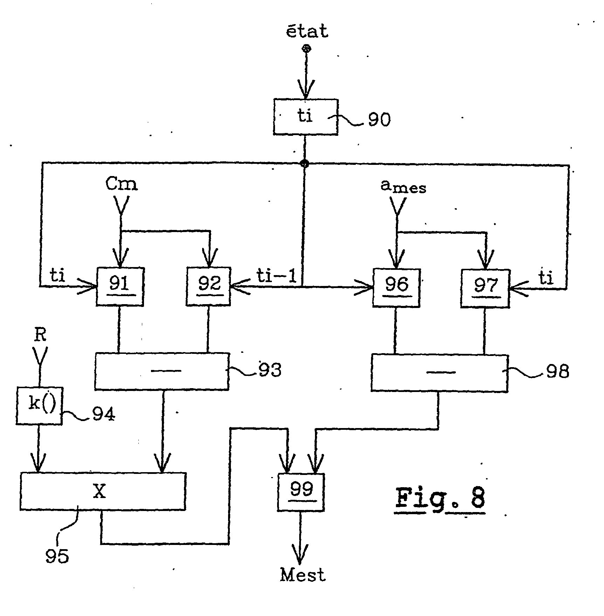

A la figure 8, on a représenté un module permettant d'exécuter le processus 73 d'estimation de la masse instantanée du véhicule.

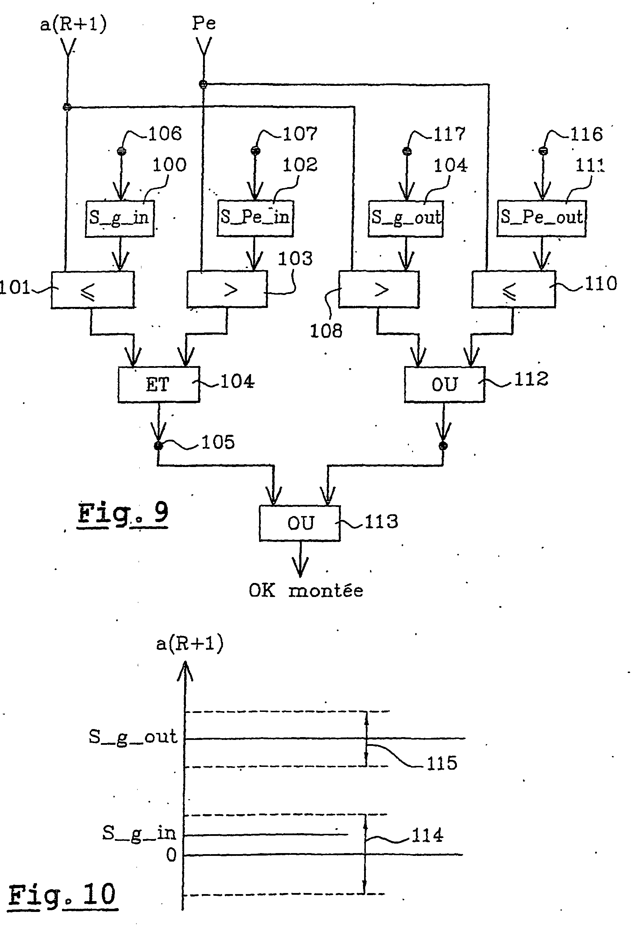

Le circuit de la figure 9 comporte un premier module 90 qui permet de déterminer les dates d'une succession $\{t_{i-1}, t_i, ... \}$ d'instants successifs d'estimation de la masse instantannée.

Ainsi qu'il est connu du brevet précité FR-A-2.737.761, ces instants sont calculés ou déterminés à l'aide de l'instant précédant $t_{i-1}$, ainsi que de différents paramètres d'état d'environnement du véhicule comme l'absence d'activation du système de freinage et un signal représentatif du degré de continuité dans le degré AP d'enfoncement de la pédale d'accélérateur sous la forme d'un booléen (d/dt).AP< Seuil_continuité.

La borne de sortie du module 90 est connectée à des bornes d'entrée d'écriture ou de validation d'écriture de registres 91, 92, 96 et 97.

Les bornes d'entrée d'écriture des registres 91 et 92 reçoivent des valeurs de mesure Cm du couple moteur.

Le registre 92 est activé lors de l'instant $t_{i-1}$ tandis que l'entrée d'écriture du registre 91 est activée lors de l'arrivée de l'instant $f_i$.

De la sorte, le circuit de l'invention mémorise en permanence une valeur Cm($t_i$) dans le registre 91 et une valeur Cm($t_{i-1}$) dans le registre 92.

Les bornes de sortie de lecture des registres 91 et 92 sont respectivement connectées aux bornes d'entrée positive et négative d'un circuit soustracteur 93 dont la borne de sortie produit une valeur numérique de la variation absolue de couple moteur $Cm(t_i)$- $Cm(t_{i-1})$.

La valeur d'écart $\Delta Cm = Cm(t_i) - Cm(t_{i-1})$ de couple moteur est transmise à une première borne d'entrée d'un multiplieur 95 dont une autre borne d'entrée reçoit la sortie de lecture d'une mémoire de cartographie 94 qui est adressée par la valeur en cours R du rapport de boîte de vitesses et dont les adresses contiennent les valeurs k(R) des rapports de transmission à la roue k.

La borne de sortie du multiplieur 95 génère la valeur instantanée du couple à la roue sur le rapport R, Cr(R).

Les registres 96 et 97 fonctionnent de la même façon que les registres 91 et 92, mais reçoivent sur leurs entrées d'écriture les suites $ames(t_i)$ et $ames(t_{i-1})$ de l'accélération mesurée issue du processus qui a été décrit à l'aide de la figure 8.

Les sorties de lecture des registres 96 et 97 sont connectées aux bornes d'entrée d'un second soustracteur 98 analogue au premier soustracteur 93 de sorte que la sortie du soustracteur 98 génère la valeur de l'écart absolu $\Delta ames = ames(t_i) - ames(t_{i-1})$ sur l'accélération mesurée.

Les sorties du soustracteur 98 et du multiplieur 95 sont transmises à deux entrées d'un module 99 d'estimation de la masse instantanée du véhicule.

Dans un mode de réalisation, la masse instantanée du véhicule est obtenue, d'un modèle dynamique de comportement du véhicule sous réserve que l'environnement du véhicule n'ait varié que d'une manière prédéterminée, la masse estimée est donnée par la relation :

$$Mest = r \times \frac{\Delta a_{mes}}{\Delta Cr}$$

qui représente le rapport des variations ou des écarts d'accélération mesurés aux écarts de couple entre deux instants $t_i$ et $t_i$-1. Dans ce cas, le module 99 d'estimation de la masse instantanée du véhicule comporte un diviseur dont l'entrée de numérateur reçoit l'écart d'accélération et dont la borne d'entrée de dénominateur reçoit l'écart de couple à la, roue, et un multiplieur dont une première borne d'entrée reçoit la valeur du rayon des roues motrices et dont une seconde borne d'entrée reçoit la valeur de sortie du diviseur. La borne de sortie du multiplieur génère un signal de sortie représentatif de la masse estimée.

Dans un autre mode de réalisation, l'estimateur de masse utilise la méthode des moindres carrés qui a été décrite dans le brevet précité FR-A-2.737.761, mais dans laquelle le couple à la roue a été calculé sur la base d'un couple moteur mesuré et non plus d'un couple moteur estimé comme c'était le cas dans cet état de la technique.

De cette manière, on réalise une meilleure précision sur la masse calculée ou estimée.

L'estimateur de masse 99 peut travailler à chaque boucle de calcul du rapport de transmission produit par le calculateur 3, ou seulement au cours de l'exécution de cette boucle quand au moins l'un des paramètres :

- r, rayon des roues motrices, ou
- l'un des écarts $\Delta ames$ ou $\Delta Cr$,

a suffisamment varié par rapport à un seuil prédéterminé détecté par un comparateur qui active ou non l'estimateur 99.

A la figure 9, on a représenté un mode de réalisation du module de test 42 du dispositif de la figure 4. Le module de test permet de produire une valeur logique OK_montée qui indique que le dispositif de l'invention autorise une incrémentation du rapport R au rapport R+1.

Le module de la figure 9 présente deux entrées des valeurs successives calculées de l'accélération estimée sur le rapport R+1, notée a(R+1), ainsi qu'une valeur de mesure Pe du degré de pente dans lequel se trouve engagé le véhicule.

La valeur de l'estimation de l'accélération sur le rapport R+1 est transmise à une première borne d'entrée d'un circuit comparateur 101 dont une seconde borne d'entrée est connectée à un registre maintenant une valeur de seuil S_g_in dont la valeur peut être calculée notamment lors de l'étape S1 d'initialisation du procédé de l'invention. La borne de sortie du comparateur 101 passe à l'état actif si la valeur estimée de l'accélération sur le rapport R+1 est inférieur à la valeur enregistrée S_g_in.

Le circuit de la figure 8 comporte une seconde entrée des valeurs de pente mesurées Pe qui sont transmises à une première borne d'entrée d'un comparateur 103.

Une seconde borne d'entrée du comparateur, 103 est connectée à la borne de sortie de lecture d'un registre 102 dans lequel est enregistrée une valeur de seuil S_Pe_in qui peut être calibrée lors de l'étape S1 d'initialisation du procédé de l'invention.

La borne de sortie du comparateur 103 passe à la valeur active si la valeur de pente est supérieure au seuil de pente qui est choisi positif de quelque pour cents.

Cette valeur de sortie est transmise à la seconde borne d'entrée d'une porte ET 104 dont da première borne d'entrée est connectée à la borne de sortie du premier comparateur 101.

La borne de sortie de la porte ET 104 est connectée à une première borne d'entrée d'une porte OU 113.

De la même façon, la première borne d'entrée d'un comparateur 108 reçoit la valeur de l'estimation d'accélération sur le rapport R+1 et une seconde borne d'entrée de ce comparateur 108 est connectée à la borne de sortie de lecture 109 d'un registre 109 maintenant une valeur S_g_out qui est un seuil calibrable notamment lors de l'étape d'initialisation S1 du procédé de l'invention.

La borne dé sortie du comparateur 108 passe à l'état actif quand la valeur d'estimation de l'accélération sur le rapport R+1 dépasse la valeur S_g_out.

Un quatrième comparateur 110 reçoit, sur une première borne d'entrée, la valeur précédemment décrite d'angle de pente Pe et, sur une seconde borne d'entrée, la valeur de lecture d'un registre 111. dans lequel est inscrit ou enregistré une valeur de seuil S_Pe_out qui est un seuil calibrable par une borne d'entrée 116 notamment lors de l'étape d'initialisation S1 du procédé de l'invention.

La borne de sortie du quatrième comparateur 110 passe à l'état actif quand la valeur de pente Pe mesurée devient inférieure à la valeur de seuil S_Pe_out du registre 111.

Les bornes de sortie des troisième (108) et quatrième (110) comparateur sont connectées respectivement aux première et seconde bornes d'entrée d'une porte OU 112.

La borne de sortie de la porte OU 112 est transmise à une seconde borne d'entrée de l'a porte OU 113 précité de sorte que la borne de sortie de la porte OU 113 produise le signal logique OK_montée qui indique l'autorisation d'incrémentation du rapport de boîte de vitesses.

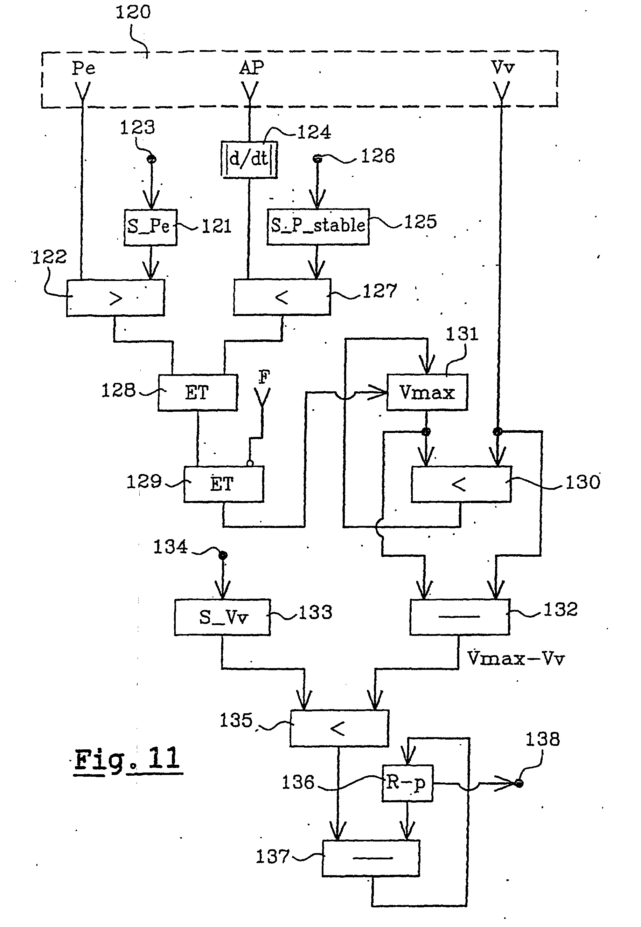

A la figure 10, on a représenté un diagramme représentant les positions respectives des seuils S_g_out et S_g_in.

Chaque seuil S_g_in peut varier entre deux bornes supérieure et inférieure selon la calibration dé sorte que le seuil S_g_in peut être légèrement positif ou légèrement négatif.

De même, le second seuil S_g_out peut varier dans une bande permise 115 par calibration dans des valeurs toujours supérieures à la valeur précédente.

A la figure 11, on a représenté un mode de réalisation de l'estimateur de décrémentation de rapport de boîte de vitesses 48 du dispositif de la figure 4.

Le module de la figure 11 comporte des moyens d'entrée d'un vecteur d'état 120 qui comporte la valeur instantanée de l'angle de pente Pe, la valeur de mesure de l'angle d'enfoncement de la pédale d'accélérateur AP et la valeur de mesure de la vitesse du véhicule Vv.

La valeur de pente Pe est transmise à une première borne d'entrée d'un comparateur 122 dont une seconde borne d'entrée est connectée à la sortie de lecture d'un registre 121 contenant un seuil calibrable par une borne d'entrée 123 lors de l'étape S1 d'initialisation du procédé de l'invention maintenant une valeur de seuil S_Pe.

La borne de sortie du premier comparateur 122 passe à l'état actif quand la valeur de pente est supérieure au seuil S_Pe.

La valeur de mesure de l'angle ou degré d'enfoncement de la pédale d'accélérateur AP est transmise à l'entrée d'un module 124 de calcul de la valeur absolue de la vitesse de variation de l'angle d'enfoncement.

La vitesse de variation de l'angle d'enfoncement transmise à la sortie du module 124 est connectée à une première borne d'entrée d'un second comparateur 127 dont la seconde entrée est connectée à la sortie de lecture d'un registre 125 d'une valeur de seuil S_P_stable.

Cette valeur de seuil est calibrable par une borne d'èntrée 126, notamment lors de l'étape S1 d'initialisation du procédé de l'invention.

La borne de sortie du second comparateur 127 passe à l'état actif quand la vitesse de variation en valeur absolue de l'angle ou degré d'enfoncement de la pédale d'accélérateur est inférieure au seuil de stabilité S_P_stable.

Les bornes de sortie des premier (122) et second (127) comparateurs sont connectées aux bornes d'entrée respectives d'une porte ET 128.

La borne de sortie de cette première porte ET 128 est connectée à une borne d'entrée d'une seconde porte ET 129 dont une seconde borne d'entrée complémentée reçoit une variable booléenne indicative de l'état du système de freinage.

La borne de sortie de la seconde porte ET 129 est connecté à une borne de commande d'un registre en écriture 131 qui reçoit la valeur maximale de déplacement du véhicule.

A cet effet, le module de la figure 12 comporte un troisième comparateur 130 dont une première borne d'entrée reçoit la valeur de mesure du vecteur vitesse de déplacement du véhicule Vv.

Si la valeur du vecteur de vitesse est inférieure à la valeur enregistrée Vmax, et que la seconde porte ET 129 est active, la nouvelle valeur de vitesse maximum est enregistrée dans le registre 131.

Dans le cas contraire, la vitesse reste constante.

Par ailleurs, un soustracteur 132 comporte une première borne d'entrée positive qui reçoit la valeur de lecture du registre 131 de vitesse maximum Vmax.

La seconde entrée négative du soustracteur 132 reçoit la valeur en cours de la vitesse du véhicule Vv.

La borne de sortie du soustracteur 132 représente la grandeur Vmax-Vv,qui est transmise à une entrée d'un quatrième comparateur 135.

L'autre borne d'entrée du quatrième comparateur 135 reçoit la valeur de lecture d'une valeur de seuil S_Vv enregistrée dans un registre 133.

Le registre 133 est calibrable par une borne d'entrée de calibration 134 notamment lors de l'étape S1 d'initialisation du procédé de l'invention.

La borne de sortie du quatrième comparateur 135 est active quand la différence Vmax-Vv est présentée à son entrée est inférieure à la valeur de seuil du registre 133.

La borne de sortie du quatrième comparateur 135 est connectée à la borne d'activation d'un circuit de décrémentation 137 dont l'entrée est connectée à la sortie de lecture d'un registre 136 maintenant une valeur représentative du décrément de rapport de boîte de vitesses.

En permanence, ce registre 136 contient la valeur R-p du rapport de transmission qui doit être commandée sur la transmission automatique par la borne de sortie 138 de lecture du registre 136.

Par ailleurs, la borne de sortie du circuit 137 de décrémentation est transmise à la borne d'entrée d'écriture du registre 136 pour le mettre à jour.

De la sorte, tant que les diverses conditions des premier (122), second (127), troisième (130) et quatrième (135) comparateurs du module de la figure 11 sont actifs, le circuit de l'invention permet d'exécuter une décrémentation de rapport tant que le rapport de boîte peut être décrémenté.

## Revendications

1. Procédé de commande d'une transmission automatique équipant un véhicule en situation de montée, **caractérisé en ce qu'**il consiste à :

   - d'une première part :

      - acquérir une valeur de mesure du couple moteur (Cm) et une valeur représentative du rapport de transmission (N). ; puis
      - exécuter une estimation de l'accélération du véhicule (ames(R;1)) sur une valeur supérieure (R+1) de rapport de transmission; puis
      - exécuter,un test sur la possibilité d'une augmentation du rapport de transmission ;

   - d'une seconde part :

      - acquérir au moins une valeur de paramètres représentatifs de l'environnement dynamique du véhicule comprenant une valeur représentative de la vitesse de déplacement du véhicule (Vv), une valeur représentative du degré , d'enfoncement (AP) de la pédale d'accélérateur; puis exécuter une estimation de réduction de rapport pour déterminer s'il existe une valeur possible de réduction du rapport de transmission et pour produire au moins une telle valeur si elle existe et

   - d'une troisième part :

      dans le cas où le test sur la possibilité d'une augmentation du rapport de transmission est positif, commander une augmentation de rapport de transmission ou, dans le cas contraire, et si l'estimation de réduction de rapport est positive, à commander une réduction du rapport de transmission, comme un rapport de boîte de vitesses.

2. Procédé selon la revendication 1, **caractérisé en ce que** l'étape d'estimation de l'accélération du véhicule sur une valeur supérieure de rapport de transmission comporte une étape d'acquisition et/ou d'estimation :

   - de l'accélération instantanée du véhicule (ames) ;
   - de la masse du véhicule (M) ;
   - du couple à la roue estimé au rapport supérieur désigné ;et

- du couple à la roue sur le rapport en cours calculé sur la base de la donnée du couple moteur (Cm) et du rapport de transmission rap(R) en cours selon une relation de la forme Cr(R) = Cm x Rap(R) ; et

une étape de calcul d'une valeur estimée d'accélération selon une relation de la forme:

$$a_{est}(R+1) = a_{mes} + \frac{1}{M}\frac{C_r(R+1) - C_r(R)}{r}$$ , de sorte que soit pris en compte d'éventuels effets altimétriques.

**3.** Procédé selon la revendication 2, **caractérisé en ce que** l'étape d'estimation de la masse du véhicule comporte :

- une étape pour déterminer la variation de couple (ΔCr) à la roue entre deux instants (t1, t2) prédéterminés, sur la base de deux mesures du couple moteur (Cm) à chacun de ces instants ;
- une étape pour déterminer la variation d'accélération (Δames) mesurée du véhicule à chacun de ces instants (t1, t2) ; et
- une étape pour calculer une estimation de la masse du véhicule selon une relation de la forme :

$$M_{est} = r \times \frac{\Delta a_{mes}}{\Delta C_r}$$

dans laquelle r est le rayon des roues motrices.

**4.** Procédé selon la revendication 1 , **caractérisé en ce que** l'étape de test sur la possibilité d'une augmentation du rapport de transmission comporte :

- une étape de test pour déterminer si l'accélération estimée (aest(R+1)) sur le rapport de transmission supérieur (R+1) est inférieur à un premier seuil calibrable prédéterminé (S_g_in) et si le degré de pente est déterminé supérieur à un seuil calibrable prédéterminé (S_g_Pe_in) et produire une indication selon laquelle l'accroissement de rapport de transmission n'est pas permise ;
- une étape de test pour déterminer si l'accélération estimée (aest(R+1)) sur le rapport de transmission supérieur (R+1) est supérieur à un seuil calibrable predéterminé (S_g_out) supérieur au premier seuil calibrable prédéterminé (S_g_in) et si le degré de pente est déterminé inférieur à un seuil calibrable prédéterminé (S_g_Pe_out) et produire une indication selon laquelle l'accroissement de rapport de transmission est permise

**5.** Procédé selon la revendication 1, **caractérisé** ne ce que l'étape pour exécuter une estimation de réduction de rapport pour déterminer s'il existe une valeur possible de réduction du rapport de transmission et pour produire au moins une telle valeur si elle existe comporte :

- une étape pour déterminer si le véhicule aborde une montée et pour observer les actions du conducteur, comme, un test sur les évolutions du degré d'enfoncement (AP) de la pédale d'accélérateur et/ou des mesures du couple moteur (Cm);
- une étape pour déterminer le futur rapport de transmission inférieur à l'actuel rapport de transmission de sorte que la chute de la vitesse du véhicule soit maintenue sous un seuil prédéterminé.

**6.** Procédé selon la revendication 5, **caractérisé en ce que** l'étape pour déterminer le futur rapport de transmission inférieur à l'actuel rapport de transmission de sorte que la chute de la vitesse du véhicule soit maintenue sous un seuil prédéterminé comporte :

- une étape pour détecter si la pente est supérieure à une valeur positive déterminé (S_Pe) calibrable ; puis, dans le cas positif,
- une étape pour détecter si la position de la pédale d'accélérateur est stable et si le système de freinage n'est pas activé ; puis dans le cas positif,
- une étape pour mémoriser la vitesse maximale (Vmax) atteinte par le véhicule ; puis
- une étape pour détecter que la chute de la vitesse (Vmax-Vv) est supérieure à un seuil (S_Vv) calibrable pouvant dépende du rapport en cours et pour détecter un sous-régime du moteur ; puis, dans le cas positif
- une étape pour commander un rétrogradage de la transmission automatique.=

**7.** Procédé selon la revendication 6, **caractérisé en ce que** l'étape pour déterminer le futur rapport de transmission inférieur à l'actuel rapport de transmission de sorte que la chute de la vitesse du véhicule soit maintenue sous un seuil prédéterminé est réitéré tant qu'un rétrogradage a été commandé lors de l'étape précédente.

8. Dispositif de commande de transmission automatique du genre comportant un moyen pour détecter de la valeur en cours du rapport de transmission et un moyen pour augmenter ou réduire la valeur en cours du rapport de transmission et dans lequel un moyen permet de mesurer le couple moteur effectivement produit à chaque instant, **caractérisé en ce qu'**il met en oeuvre le procédé selon l'une des revendications précédentes, et **en ce qu'**il comporte un estimateur (41) d'une valeur d'accélération sur une valeur supérieure à la valeur en cours du rapport de transmission, un moyen de test (42) de possibilité d'augmentation de la valeur en cours du rapport de transmission, un moyen de test (48) d'une estimation de réduction de la valeur en cours du rapport de transmission, un circuit générateur (SR) d'une incrémentation ou d'une décrémentation de rapport de transmission en situation de montée.

9. Dispositif selon la revendication 8, **caractérisé en ce que** l'estimateur (41) d'une valeur d'accélération sur une valeur supérieure à la valeur en cours du rapport de transmission comporte :

   - le cas échéant, une première mémoire (61) de cartographie pour produire une valeur (rap(R)) du rapport de transmission en cours sur la base de l'information (R) du rapport engagé ;
   - une seconde mémoire (62) de cartographie adressée par une mesure du degré d'enfoncement de la pédale d'accélérateur (AP) et une mesure du régime moteur (Nm) pour produire une valeur du couple moteur calculé (Cm_calculé) en fonction des deux valeurs d'adressage ;
   - un circuit multiplieur (65) pour produire une valeur représentative du couple à la roue sur le rapport de transmission en cours dont les deux entrées sont respectivement connectées à un registre d'entrée du couple moteur (Cm) transmis et à la sortie de la première mémoire de cartographie (61) ;
   - un module (64) pour produire une valeur estimée de couple à la roue sur le rapport de transmission supérieur désigné (R+1) en fonction de la sortie de la seconde mémoire de cartographie (62) d'une valeur du couple moteur calculé (Cm_calculé) sur le rapport supérieur et d'une valeur précédente du couple moteur calculé (Cm_calculé) sur le rapport en cours mémorisé dans une mémoire (63) ainsi que sur la base d'une mesure du couple moteur (Cm) en cours selon une relation de la forme :

$$C_r(N+1) = \left[ \frac{C_m}{C_m\_calculé[Nm(R), AP]} \right] \times C_m\_calculé[Nm(R+1), AP] \times K(R+1)$$

   - un soustracteur (66) des valeurs de sortie du module (64) et du multiplieur (65) ;
   - un premier circuit diviseur (67) dont l'entrée de numérateur est connecté à la sortie du soustracteur (66) et l'entrée de dénominateur est connectée à un registre (69) du rayon des roues motrices
   - un second circuit diviseur (68) dont l'entrée de numérateur est connectée à la sortie du premier diviseur (67) et- dont l'entrée de dénominateur est connectée à un registre calibrable (70) de la masse effective du véhicule, le cas échéant connecté à un module d'estimation de la masse effective du véhicule (73) ;
   - un additionneur (71) dont les entrées son respectivement connectées à la sortie du soustracteur (68) et à la sortie de lecture d'un registre maintenant la valeur mesurée de l'accélération instantanée du véhicule (Ames).

10. Dispositif selon la revendication 9, **caractérisé en ce que** le module (73) d'estimation de la masse effective du véhicule comporte :

   - un premier module (90) pour déterminer les dates d'une succession $\{t_{i-1}, t_i, ... \}$ d'instants successifs d'estimation de la masse instantanée, à l'aide de l'instant précédant $t_{i-1}$, ainsi que de différents paramètres d'état d'environnement du véhicule comme l'absence d'activation du système de freinage et un signal représentatif du degré de continuité dans le degré AP d'enfoncement de la pédale d'accélérateur sous la forme d'un booléen $(d/dt).AP <$ Seuil_continuité;
   - des registres (91, 92) recevant des valeurs de mesure Cm du couple moteur ;
   - un premier circuit soustracteur (93) dont la borne de sortie produit une valeur numérique de la variation absolue de couple moteur $Cm(t_i) - Cm(t_{i-1})$ ;
   - Un multiplieur (95) dont une autre borne d'entrée reçoit la sortie de lecture d'une mémoire de cartographie 94 qui est adressée par la valeur en cours R du rapport de boîte de vitesses et dont les adresses contiennent les valeurs k(R) des rapports de transmission à la roue k pour générer la valeur instantanée du couple à la roue sur le rapport R, Cr(R) ;

- des registres (96, 97) pour enregistrer les suites ames(ti) et ames(ti-1) de l'accélération mesurée ;
- un second soustracteur (98) dont la borne de sortie produit une valeur numérique de la variation absolue Δames = ames(ti) - ames(ti-1) sur l'accélération mesurée ;
- un module (99) d'estimation de la masse instantanée du véhicule exécutant un modèle dynamique de comportement du véhicule selon une relation de la forme :

$$M_{est} = r \times \frac{\Delta a_{mes}}{\Delta C_r}.$$

**11.** Dispositif selon la revendication 8, **caractérisé en ce que** le moyen de test (42) de possibilité d'augmentation de la valeur en cours du rapport de transmission comporte :

- un premier comparateur (101) dont une seconde borne d'entrée est connectée à un registre maintenant une valeur de seuil S_g_in dont la valeur peut être calculée notamment lors de l'étape S1 d'initialisation du procédé de l'invention ;
- un second comparateur (103) dont une seconde borne d'entrée est connectée à la borne de sortie de lecture d'un registre (102) dans lequel est enregistrée une valeur de seuil S_Pe_in qui peut être calibrée lors de l'étape (S1) d'initialisation du procédé de l'invention, dont la borne de sortie du comparateur (103) passe à la valeur active si la valeur de pente est supérieure au seuil de pente qui est choisi positif de quelque pour cents ;
- une porte ET (104) connectée aux premier (101) et second (103) comparateur;
- La borne de sortie de la porte ET (104) est connectée à une première borne d'entrée d'une porte OU (113) ;
- un troisième comparateur (108) dont une seconde borne d'entrée est connectée à un registre (109) maintenant une valeur S_g_out qui est un seuil calibrable notamment lors de l'étape d'initialisation (S1) du procédé de l'invention de sorte que la borne de sortie du comparateur (108) passe à l'état actif quand la valeur d'estimation de l'accélération sur le rapport R+1 dépasse la valeur S_g_out ;
- un quatrième comparateur (110) dont une seconde borne d'entrée est connectée à un registre (111) dans lequel est inscrit ou enregistré une valeur de seuil S_Pe_out qui est un seuil calibrable notamment lors de l'étape d'initialisation (S1) du procédé de l'invention, de sorte que la borne de sortie du quatrième comparateur (110) passe à l'état actif quand la valeur de pente Pe mesurée devient inférieure à la valeur de seuil S_Pe_out du registre (111) ;
- une porte OU (112) connectée aux troisième (108) et quatrième (110) comparateurs ;
- une porte OU (113) connectée aux sorties des portes ET (104) et OU (112) de sorte que la borne de sortie de la porte OU (113) produise le signal logique OK_montée qui indique l'autorisation d'incrémentation du rapport de boîte de vitesses.

**12.** Dispositif selon la revendication 8, **caractérisé en ce que** l'estimateur de décrémentation de rapport de transmission comme un rapport de boîte de vitesses (48) comporte :

- des moyens d'entrée d'un vecteur d'état (120) qui comporte la valeur instantanée de l'angle de pente Pe, la valeur de mesure de l'angle d'enfoncement de la pédale d'accélérateur AP et la valeur de mesure de la vitesse du véhicule Vv ;
- un premier comparateur (122) dont une seconde borne d'entrée est connectée à la sortie de lecture d'un registre 121 contenant un seuil calibrable (S_Pe) et qui passe à l'état actif quand la valeur de pente (Pe) est supérieure au seuil S_Pe ;
- un module (124) de calcul de la valeur absolue de la vitesse de variation de l'angle d'enfoncement ;
- un second comparateur (127) dont la seconde entrée est connectée à la sortie de lecture d'un registre (125) d'une valeur de seuil (S_P_stable) calibrable notamment lors de l'étape (S1) d'initialisation du procédé de l'invention et qui passe à l'état actif quand la vitesse de variation en valeur absolue de l'angle ou degré d'enfoncement de la pédale d'accélérateur est inférieure au seuil de stabilité S_P_stable ;
- une porte ET (128) connectée aux premier (122) et second (127) comparateurs ;
- une seconde porte ET (129) connectée à la première porte ET (128) et à une variable booléenne indicative de l'état du système de freinage ;
- un registre en écriture (131) de valeur maximale de vitesse (Vmax) du véhicule, dont une borne de commande est connectée à la borne de sortie de la seconde porte ET 129 ;
- un troisième comparateur (130) dont une première borne d'entrée reçoit la valeur de mesure du vecteur vitesse de déplacement du véhicule Vv et de sorte que si la valeur du vecteur de vitesse est inférieure à la valeur enregistrée Vmax, et que la seconde porte ET (129) est active, la nouvelle valeur de vitesse maximum est enregistrée dans le registre (131) et de sorte que, dans le cas contraire, la vitesse reste constante ;
- un soustracteur (132) dont la borne de sortie représente la grandeur Vmax-Vv ;
- un quatrième comparateur (135) dont les bornes d'entrées sont connectées au soustracteur (132) et à un registre (133) de la valeur de lecture d'une valeur de seuil S_Vv, calibrable notamment lors de l'étape (S1) d'initialisation du procédé de l'invention ; et
- un circuit de décrémentation (137) dont une première borne d'entrée est connectée à la borne de sortie du quatrième comparateur (135) et une seconde borne d'entrée est connectée à la sortie de lecture d'un registre (136) maintenant une valeur représentative du décrément de rapport de boîte de vitesses, et remis à jour par une borne de sortie du circuit (137) de décrémentation connectée à la borne d'entrée d'écriture du registre (136) pour le mettre à jour, une borne de sortie de lecture (138) mettant à disposition le signal représentatif de la valeur représentative du décrément de rapport de boîte de vitesses.

## Claims

1. A control method for an automatic transmission fitted in a vehicle in uphill mode, **characterised in that** it consists:

   - firstly,
   - in acquiring a measurement value of the engine torque (Cm) and a value representative of the transmission ratio (N); then
   - in estimating the acceleration of the vehicle (ames(R+1)) at a higher transmission ratio value (R+1); then
   - in testing the possibility of an increase of the transmission ratio;
   - secondly,
   - in acquiring at least one value of parameters representative of the dynamic environment of the vehicle comprising a value representative of the speed of travel of the vehicle (Vv), and a value representative of the degree of depression (AP) of the accelerator pedal; then
   - in carrying out a ratio reduction estimate to determine whether there is a possible transmission ratio reduction value and to generate at least one such value if it exists; and
   - thirdly,

   in the case where the test for the possibility of a transmission ratio increase is positive, controlling a transmission ratio increase or, in the opposite case, and if the ratio reduction estimate is positive, controlling a reduction of the transmission ratio, such as a gearbox ratio.

2. A method as claimed in claim 1, **characterised in that** the stage of estimation of the acceleration of the vehicle at a higher transmission ratio value comprises a stage of acquisition and/or of estimation of:

   - the instantaneous acceleration of the vehicle (ames);
   - the mass of the vehicle (M);
   - the estimated wheel torque at the higher ratio selected;
   - the wheel torque at the current ratio calculated on the basis of the engine torque information (Cm) and the current transmission ratio (rap(R)) according to a relationship of the type $Cr(R) = Cm \times Rap(R)$; and a stage of calculation of an estimated acceleration value according to a relationship of the type: $aest(R+1) = ames + (1/M)([C_r(R+1) - C_r(R)]/r)$ so that any altimetric effects are taken into account.

3. A method as claimed in claim 2, **characterised in that** the stage of estimation of the vehicle mass comprises:

   - a stage of calculation of the wheel torque variation ($\Delta Cr$) between two predetermined instants (t1, t2) on the basis of two measurements of the engine torque (Cm) at each of these instants;
   - a stage of calculation of the acceleration variation ($\Delta ames$) measured for the vehicle at each of these instants (t1, t2);
   - a stage of calculation of an estimation of the vehicle mass according to a relationship of the type: $Mest = r \times (\Delta ames) / (\Delta Cr)$ in which r is the radius of the drive wheels.

4. A method as claimed in claim 1, **characterised in that** the stage of testing the possibility of a transmission ratio increase comprises:

- a test stage to determine whether the estimated acceleration (aest(R+1)) at the higher transmission ratio (R+1) is lower than a first predetermined calibratable threshold (S_g_in) and whether the degree of slope is calculated to be greater than a first calibratable predetermined threshold (S_g_Pe_in) and to generate an indication according to which the transmission ratio increase is not authorised;

- a test stage to determine whether the estimated acceleration (aest(R+1)) at the higher transmission ratio (R+1) is greater than a predetermined calibratable threshold (S_g_out) higher than the first predetermined calibratable threshold (S_g_in) and whether the degree of slope is calculated to be lower than a predetermined calibratable threshold (S_g_Pe_out) and to generate an indication according to which the transmission ratio increase is authorised.

5. A method as claimed in claim 1, **characterised in that** the stage of carrying out a ratio reduction estimation to determine whether there is a possible transmission ratio reduction value and to generate at least one such value if it exists comprises:

- a stage to determine whether the vehicle is starting to travel uphill and to observe the actions of the driver, such as a test of any changes in the degree of depression (AP) of the accelerator pedal and/or the measurements of the engine torque (Cm);
- a stage to determine the future transmission ratio lower than the current transmission ratio so that the drop in the speed of the vehicle is kept below a predetermined threshold.

6. A method as claimed in claim 5, **characterised in that** the stage of determining the future transmission ratio lower than the current transmission ratio so that the drop in the speed of the vehicle is kept below a predetermined threshold comprises:

- a stage to detect whether the slope is higher than a predetermined calibratable positive value (S_Pe), and, if this is the case:

- a stage to detect whether the position of the accelerator pedal is stable and whether the braking system has not been actuated, and, if this is the case:

- a stage to memorise the maximum speed (Vmax) achieved by the vehicle; then
- a stage to detect that the drop in speed (Vmax - Vv) is greater than a calibratable threshold (S_Vv) which may depend on the current ratio and for detecting a sub-speed of the engine; and, if this is the case:

- a stage to control a shift down of the automatic transmission.

7. A method as claimed in claim 6, **characterised in that** the stage for determining the future transmission ratio lower than the current transmission ratio so that the drop in the speed of the vehicle is kept below a predetermined threshold is repeated when a shift down has been controlled during the preceding stage.

8. A control device for an automatic transmission of the type comprising a means for detecting the current value of the transmission ratio and a means for increasing or decreasing the current value of the transmission ratio and in which a means makes it possible to measure the engine torque actually generated at each instant, **characterised in that** it applies the method as claimed in one of the preceding claims, and **in that** it comprises an estimator (41) of an acceleration value at a value higher than the current value of the transmission ratio, a means (42) for testing the possibility of increasing the current value of the transmission ratio, a means (48) for testing an estimated reduction of the current value of the transmission ratio, and a circuit (SR) generating a transmission ratio increment or a decrement in an uphill situation.

9. A device as claimed in claim 8, **characterised in that** the estimator (41) of an acceleration value at a value higher than the current value of the transmission ratio comprises:

- where necessary, a first mapping memory (61) adapted to generate a value (rapR)) of the current transmission ratio on the basis of the information (R) on the ratio engaged;
- a second mapping memory (62) input by a measurement of the degree of depression of the accelerator pedal (AP) and a measurement of the engine speed (Nm) in order to generate a calculated engine torque value (Cm_calculated) as a function of the two input values;
- a multiplier circuit (65) adapted to generate a value representative of the wheel torque at the current transmission ratio, whose two inputs are respectively connected to an input register of the engine torque (Cm) transmitted and to the output of the first mapping memory (61);

- a module (64) adapted to generate an estimated value of the wheel torque at the higher transmission ratio selected (R+1) as a function of the output from the second mapping memory (62) of a calculated engine torque value (Cm_calculated) at the higher ratio and a preceding value of the calculated engine torque (Cm_calculated) at the current ratio stored in a memory (63) and on the basis of a measurement of the current engine torque (Cm) according to a relationship of the type:

$$Cr\ (N{+}1) = [(Cm)\ /\ (Cm\_calculated[Nm(R),\ AP]]\ x\ Cm\_calculated[Nm(R{+}1),\ AP]\ x\ K(R{+}1);$$

- a subtracter (66) of the output values of the module (64) and the multiplier (65);
- a first divider circuit (67) whose numerator input is connected to the output of the subtracter (66) and whose denominator input is connected to a register (69) of the drive wheel radius;
- a second divider circuit (68) whose numerator input is connected to the output of the of the first divider (67) and whose denominator input is connected to a calibratable register (70) of the actual vehicle mass, where necessary connected to an estimation module of the actual vehicle mass (73);
- an adder (71) whose inputs are respectively connected to the output of the subtracter (68) and to the reading output of a register maintaining the measured value of the instantaneous acceleration of the vehicle (Ames).

**10.** A device as claimed in claim 9, **characterised in that** the estimation module (73) of the actual vehicle mass comprises:

- a first module (90) for determining the dates of a sequence ($t_{i-1}$, $t_1$, etc.) of successive instants of estimation of the instantaneous mass, by means of the preceding instant ($t_{i-1}$), and different parameters of the environmental conditions of the vehicle such as the absence of actuation of the braking system and a signal representative of the degree of continuity in the degree (AP) of depression of the accelerator pedal in the form of a Boolean (d/dt).AP < threshold_continuity;
- registers (91, 92) receiving the measurement values (Cm) of the engine torque;
- a first subtracter circuit (93) whose output terminal generates a numerical value of the absolute engine torque variation ($Cm(t_i)$ - $Cm$ ($t_{i-1}$));
- a multiplier (95), another input terminal of which receives the reading output of a mapping memory (94) which is input by the current value (R) of the gearbox ratio and whose inputs contain the values k(R) of the transmission ratios at the wheel (k) in order to generate the instantaneous wheel torque value at the ratio (R), Cr(R);
- registers (96, 97) for registering the sequences (ames(ti)) and (ames(ti-1)) of the measured acceleration;
- a second subtracter (98) whose output terminal generates a numerical value of the absolute variation (Δames = ames(ti) - ames(ti-1)) at the acceleration measured;
- a module (99) for estimating the instantaneous mass of the vehicle executing a dynamic model of behaviour of the vehicle according to a relationship of the type: Mest = r x (Δames) / ΔCr.

**11.** A device as claimed in claim 8, **characterised in that** the means (42) for testing the possibility of increasing the current transmission ratio value comprise:

- a first comparator (101), a second input terminal of which is connected to a register maintaining a threshold value (S_g_in) whose value may be calculated in particular during the initialisation stage (S1) of the method of the invention;
- a second comparator (103), a second input terminal of which is connected to the reading output terminal of a register (102) in which there is registered a threshold value (S_Pe_in) which may be calibrated during the initialisation stage (S1) of the method of the invention, wherein the output terminal of the comparator (103) switches to the active value if the slope value is greater than the threshold slope which is selected to be positive by a few per cent;
- an AND gate (104) connected to the first and second comparators (101, 103);
- the output terminal of the AND gate (104) being connected to a first input terminal of an OR gate (113);
- a third comparator (108), a second input terminal of which is connected to a register (109) maintaining a value (S_g_out) which is a threshold which may be calibrated in particular during the initialisation stage (S1) of the method of the invention such that the output terminal of the comparator (108) switches to the active state when the estimated value of the acceleration at the ratio (R+1) exceeds the value (S_g_out);

- a fourth comparator (110), a second input terminal of which is connected to a register (111) in which there is input or recorded a threshold value (S_Pe_out) which is a threshold which may be calibrated in particular during the initialisation stage (S1) of the method of the invention, so that the output terminal of the fourth comparator (110) switches to the active state when the measured slope value (Pe) drops below the threshold value (S_Pe_out) of the register (111);

- and OR gate (112) connected to the third and fourth comparators (108,110);

- an OR gate (113) connected to the terminals of the AND and OR gates 104, 112) so that the output terminal of the OR gate (113) generates the logic signal (OK_uphill) giving authorisation to increase the gearbox ratio.

12. A device as claimed in claim 8, **characterised in that** the estimator of a decrement of a transmission ratio, such as a gearbox ratio (48), comprises:

- input means of a state vector (120) which comprises the instantaneous value of the angle of slope (Pe), the measurement value of the angle of depression of the accelerator pedal (AP) and the measurement value of the vehicle speed (Vv);

- a first comparator (122), a second input terminal of which is connected to the reading output of a register (121) containing a calibratable threshold (S_Pe), which switches to the active state when the slope value (Pe) is greater than threshold (S_Pe);

- a module (124) for calculating the absolute value of the speed of variation of the angle of depression;

- a second comparator (127) whose second input is connected to the reading output of a register (125) of a threshold value (S_P_stable) which may be calibrated in particular during the initialisation stage (S1) of the method of the invention and which switches to the active state when the speed of variation, as an absolute value, of the angle or degree of depression of the accelerator pedal is lower than the stability threshold (S_P_stable);

- an AND gate (128) connected to the first and second comparators (122, 127);

- a second AND gate (129) connected to the first AND gate (128) and to a Boolean variable indicative of the state of the braking system;

- a writing register (131) of the maximum speed value (Vmax) of the vehicle, a control terminal of which is connected to the output terminal of the second AND gate (129);

- a third comparator (130), a first input terminal of which receives the measurement value of the speed of travel vector of the vehicle (Vv) so that if the value of the speed vector is below the recorded value (Vmax), and the second AND gate (129) is active, the new maximum speed value is recorded in the register (131), and so that, in the opposite case, the speed remains constant;

- a subtracter (132) whose output terminal represents the magnitude (Vmax-Vv);

- a fourth comparator (135) whose input terminals are connected to the subtracter (132) and to a register (133) of the reading value of a threshold value (S_Vv) which can be calibrated in particular during the initialisation stage (S1) of the method of the invention;

- a decrement circuit (137), a first input terminal of which is connected to the output terminal of the fourth comparator (135) and a second input terminal of which is connected to the reading output of a register (136) maintaining a value representative of the gearbox ratio decrement and updated by an output terminal of the decrement circuit (137) connected to the writing input terminal of the register (136) in order to update it, a reading output terminal (138) making available the signal representative of the value representative of the gearbox ratio decrement.

**Patentansprüche**

1. Verfahren zur Steuerung eines eine Ausstattung eines Fahrzeuges darstellenden Automatikgetriebes in der Situation einer Steigung, **dadurch gekennzeichnet, dass** es darin besteht:

- zu einem ersten Teil:

- einen Messwert des Motordrehmomentes (Cm) und einen für die Getriebeübersetzung (N) repräsentativen Wert zu erfassen; sodann
- eine Schätzung der Fahrzeugbeschleunigung ($a_{mes}$(R+1)) bei einem höheren Wert (R+1) der Getriebeübersetzung durchzuführen;sodann
- einen Test über die Möglichkeit einer Erhöhung der Getriebeübersetzung durchzuführen;

- zu einem zweiten Teil:

- wenigstens einen Wert von Parametern zu erfassen, die für die dynamische Umgebung des Fahrzeuges repräsentativ sind, umfassend einen für die Fortbewegungsgeschwindigkeit des Fahrzeuges (Vv) repräsentativen Wert, einen für den Senkungsgrad (AP) des Gaspedals repräsentativen Wert; sodann
- eine Schätzung der Übersetzungsverringerung durchzuführen, um festzustellen, ob ein möglicher Wert der Verringerung der Getriebeübersetzung existiert, und um mindestens einen solchen Wert zu erzeugen, wenn er existiert; und

- zu einem dritten Teil:

in dem Fall, in welchem der Test über die Möglichkeit einer Erhöhung der Getriebeübersetzung positiv ist, eine Erhöhung der Getriebeübersetzung zu befehligen, oder, im entgegengesetzten Fall, und wenn die Schätzung der Verringerung der Übersetzung positiv ist, eine Verringerung der Getriebeübersetzung zu befehligen, als eine Übersetzung bzw. einen Gang des Getriebes.

2. Verfahren gemäß Anspruch 1, **dadurch gekennzeichnet, dass** der Schritt der Schätzung der Fahrzeugbeschleunigung bei einem höheren Wert der Getriebeübersetzung einen Schritt zur Akquisition und/oder Schätzung:

- der gegenwärtigen Fahrzeugbeschleunigung ($a_{mes}$);
- der Fahrzeugmasse (M);
- des bei der ausgewählten, höheren Übersetzung geschätzten Drehmomentes am Rad; und
- des Drehmomentes am Rad bei der gegenwärtigen Übersetzung, das auf der Grundlage der Angabe des Motordrehmomentes (Cm) und der gegenwärtigen Getriebeübersetzung rap(R) gemäß einer Beziehung der Form Cr(R) = Cm . Rap(R) berechnet wird,

umfasst; und
einen Schritt zur Berechnung eines geschätzten Beschleunigungswertes gemäß einer Beziehung der Form:

$$a_{est}(R+1) = a_{mes} + \frac{1}{M}\frac{Cr(R+1)-Cr(R)}{r}$$

so dass eventuelle Höheneffekte berücksichtigt werden.

3. Verfahren gemäß Anspruch 2, **dadurch gekennzeichnet, dass** der Schritt der Schätzung der Fahrzeugmasse folgendes umfasst:

- einen Schritt zur Bestimmung der Drehmomentveränderung ($\Delta Cr$) am Rad zwischen zwei vorbestimmten Augenblicken (t1, t2), auf der Grundlage zweier Messungen des Motordrehmomentes (Cm) bei jedem dieser Augenblicke;
- einen Schritt zur Bestimmung der Veränderung ($\Delta a_{mes}$) der bei jedem dieser Augenblicke (t1, t2) gemessenen Fahrzeugbeschleunigung;und
- einen Schritt zur Berechnung einer Schätzung der Fahrzeugmasse gemäß einer Beziehung der Form:

$$M_{est} = r \cdot \frac{\Delta a_{mes}}{\Delta Cr},$$

wobei r der Radius der Antriebsräder ist.

4. Verfahren gemäß Anspruch 1, **dadurch gekennzeichnet, dass** der Schritt zum Testen der Möglichkeit einer Erhöhung der Getriebeübersetzung folgendes umfasst:

- einen Testschritt, um zu bestimmen, ob die bei der höheren Getriebeübersetzung (R+1) geschätzte Beschleu-

nigung ($a_{est}$(R+1)) geringer ist als ein erster kalibrierbarer, vorbestimmter Schwellenwert (S _g_in) und ob der Steigungsgrad als höher als ein vorbestimmter, kalibrierbarer Schwellenwert (S_g_Pe_in) bestimmt ist, und um eine Angabe zu erzeugen, gemäß welcher die Erhöhung der Getriebeübersetzung nicht erlaubt ist;
- einen Testschritt, um zu bestimmen, ob die bei der höheren Getriebeübersetzung (R+1) geschätzte Beschleunigung ($a_{est}$(R+1)) größer ist als ein vorbestimmter, kalibrierbarer Schwellenwert (S_g_out), der größer ist als der erste kalibrierbare, vorbestimmte Schwellenwert (S g_in) und ob der Steigungsgrad als geringer als ein vorbestimmter, kalibrierbarer Schwellenwert (S_g_Pe_out) bestimmt ist, und eine Angabe zu erzeugen, gemäß welcher die Erhöhung der Getriebeübersetzung erlaubt ist.

5. Verfahren gemäß Anspruch 1, **dadurch gekennzeichnet, dass** der Schritt zur Durchführung einer Schätzung der Verringerung der Übersetzung, zur Bestimmung, ob es einen möglichen Wert zur Verringerung der Getriebeübersetzung gibt und um wenigstens einen solchen Wert zu erzeugen, wenn es ihn gibt, folgendes umfasst:

- einen Schritt zur Bestimmung, ob das Fahrzeug eine Steigung angeht, und zur Beobachtung der Handlungen des Fahrers, wie beispielsweise einen Test über die Veränderungen des Senkungsgrades (AP) des Gaspedals und/oder Messungen des Motordrehmomentes (Cm);
- einen Schritt zur Bestimmung der zukünftigen Getriebeübersetzung, welche geringer ist als die derzeitige Getriebeübersetzung, so dass der Abfall der Fahrzeuggeschwindigkeit unterhalb eines vorbestimmten Schwellenwertes gehalten wird.

6. Verfahren gemäß Anspruch 5, **dadurch gekennzeichnet, dass** der Schritt zur Bestimmung der zukünftigen Getriebeübersetzung, welche geringer ist als die gegenwärtige Getriebeübersetzung, so dass der Abfall der Fahrzeuggeschwindigkeit unter einem vorbestimmten Schwellenwert gehalten wird, folgendes umfasst:

- einen Schritt, um zu detektieren, ob die Steigung größer ist als ein bestimmter, kalibrierbarer, positiver Wert (S_Pe); sodann, im positiven Fall,
- einen Schritt, um zu detektieren, ob die Stellung des Gaspedals stabil ist und ob das Bremssystem nicht aktiviert ist; sodann, im positiven Fall,
- einen Schritt zur Speicherung der durch das Fahrzeug erreichten Maximalgeschwindigkeit (Vmax); sodann
- einen Schritt, um zu detektieren, dass der Geschwindigkeitsabfall (Vmax - Vv) größer ist als ein kalibrierbarer Schwellenwert (S_Vv), der von der gegenwärtigen Übersetzung abhängen kann, und um eine Unterdrehzahl des Motors zu detektieren; sodann, im positiven Fall,
- einen Schritt zum Befehligen eines Runterschaltens des Automatikgetriebes.

7. Verfahren gemäß Anspruch 6, **dadurch gekennzeichnet, dass** der Schritt zur Bestimmung der zukünftigen Getriebeübersetzung, welche geringer ist als die gegenwärtige Getriebeübersetzung, so dass der Geschwindigkeitsabfall des Fahrzeuges unter einem vorbestimmten Schwellenwert gehalten wird, wiederholt wird, solange beim vorhergehenden Schritt ein Runterschalten befehligt wurde.

8. Vorrichtung zur Steuerung eines Automatikgetriebes vom Typ mit einem Mittel zur Detektion des gegenwärtigen Wertes der Getriebeübersetzung und einem Mittel zur Erhöhung oder Verringerung des gegenwärtigen Wertes der Getriebeübersetzung und in welcher ein Mittel es erlaubt, das in jedem Augenblick effektiv erzeugte Motordrehmoment zu messen, **dadurch gekennzeichnet, dass** sie das Verfahren gemäß einem der vorhergehenden Ansprüche einsetzt, und **dadurch**, dass sie einen Schätzer (41) eines Beschleunigungswertes bei einem höheren Wert als dem gegenwärtigen Wert der Getriebeübersetzung umfasst, ein Mittel zum Testen (42) der Möglichkeit einer Erhöhung der gegenwärtigen Getriebeübersetzung, ein Mittel zum Testen (48) einer Schätzung einer Verringerung des gegenwärtigen Wertes der Getriebeübersetzung, eine Schaltung (SR) zur Erzeugung einer Inkrementierung oder einer Dekrementierung der Getriebeübersetzung in der Situation einer Steigung.

9. Vorrichtung gemäß Anspruch 8, **dadurch gekennzeichnet, dass** der Schätzer (41) eines Beschleunigungswertes bei einem höheren Wert als dem gegenwärtigen Wert der Getriebeübersetzung folgendes umfasst:

- gegebenenfalls einen ersten Kennfeldspeicher (61), um einen Wert (rap(R)) der gegenwärtigen Getriebeübersetzung auf der Grundlage der Information (R) der eingesetzten Übersetzung zu erzeugen;
- einen zweiten Kennfeldspeicher (62), der über eine Messung des Senkungsgrades des Gaspedals (AP) und eine Messung der Motordrehzahl (Nm) adressiert wird, um einen in Abhängigkeit der beiden Adresswerte berechneten Wert des Motordrehmomentes (Cm_berechnet) zu erzeugen;
- eine Multiplizierschaltung (65), um einen repräsentativen Wert des Drehmomentes am Rad bei der gegenwärtigen Getriebeübersetzung zu erzeugen, deren zwei Eingänge jeweils mit einem Register zur Eintragung des übertragenen Motordrehmomentes (Cm) und dem Ausgang des ersten Kennfeldspeichers (61) verbunden sind;

- ein Modul (64) zur Erzeugung eines geschätzten Wertes des Drehmomentes am Rad bei der ausgewählten höheren Getriebeübersetzung (R+1) in Abhängigkeit der Ausgabe aus dem zweiten Kennfeldspeicher (62) eines Wertes des bei der höheren Übersetzung berechneten Motordrehmomentes (Cm_berechnet) und eines vorhergehenden Wertes des bei der gegenwärtigen Übersetzung berechneten Motordrehmomentes (Cm_berechnet), das in einem Speicher (63) gespeichert ist, sowie auf der Grundlage einer Messung des gegenwärtigen Motordrehmomentes (Cm) gemäß einer Beziehung der Form:

$$Cr(N+1) = \left[ \frac{Cm}{Cm\_berechnet[Nm(R), AP]} \right] \cdot Cm\_berechnet[Nm(R+1), AP] \cdot K(R+1)$$

- einen Subtrahierer (66) der Ausgangswerte des Moduls (64) und des Multiplizierers (65);
- eine erste Divisorschaltung (67), deren Zählereingang mit dem Ausgang des Subtrahierers (66) und deren Nennereingang mit einem Register (69) des Radius der Antriebsräder verbunden ist;
- eine zweite Divisorschaltung (68), deren Zählereingang mit dem Ausgang des ersten Divisors (67) und deren Nennereingang mit einem kalibrierbaren Register (70) der effektiven Fahrzeugmasse verbunden ist, welches gegebenenfalls mit einem Modul zur Schätzung der effektiven Fahrzeugmasse (73) verbunden ist;
- einen Addierer (71), dessen Eingänge jeweils mit dem Ausgang des Subtrahierers (68) und mit dem Leseausgang eines Registers verbunden sind, das den gemessenen Wert der gegenwärtigen Beschleunigung des Fahrzeuges (Ames) beibehält.

10. Vorrichtung gemäß Anspruch 9, **dadurch gekennzeichnet, dass** das Modul (73) zur Schätzung der effektiven Fahrzeugmasse folgendes umfasst:

- ein erstes Modul (90) zur Bestimmung der Zeitpunkte einer Abfolge $\{t_{i-1}, t_i, ...\}$ von aufeinanderfolgenden Augenblicken der Schätzung der gegenwärtigen Masse mit Hilfe des vorhergehenden Augenblicks $t_{i-1}$, sowie verschiedener Parameter des Zustandes der Umgebung des Fahrzeuges, wie die Abwesenheit der Aktivierung des Bremssystems und ein Signal, welches für den Kontinuitätsgrad im Senkungsgrad AP des Gaspedals repräsentativ ist, in boolescher Form (d/dt).AP < Schwellenwert_Kontinuität;
- Register (91, 92), welche Messwerte Cm des Motordrehmomentes empfangen;
- eine erste Subtrahierschaltung (93), deren Ausgangsanschluss einen digitalen Wert der absoluten Veränderung des Motordrehmomentes $Cm(t_i)-Cm(t_{i-1})$ ausgibt;
- einen Multiplizierer (95), dessen anderer Eingangsanschluss den Leseausgang eines Kennfeldspeichers (94) empfängt, der über den gegenwärtigen Wert R der Übersetzung des Getriebes adressiert wird und dessen Adressen die Werte k(R) der Übersetzungen des Getriebes an das Rad k enthalten, um den gegenwärtigen Wert des Drehmomentes am Rad bei der Übersetzung R, Cr(R), zu erzeugen;
- Register (96, 97), um die Folgen $a_{mes}(t_i)$ und $a_{mes}(t_{i-1})$ der gemessenen Beschleunigung zu speichern;
- einen zweiten Subtrahierer (98), dessen Ausgangsanschluss einen digitalen Wert der absoluten Veränderung $\Delta a_{mes} = a_{mes}(t_i) - a_{mes}(t_{i-1})$ bei der gemessenen Beschleunigung ausgibt;
- ein Modul (99) zur Schätzung der gegenwärtigen Masse des Fahrzeuges, welches ein dynamisches Verhaltensmodell des Fahrzeuges gemäß einer Beziehung der Form:

$$Mest = r \cdot \frac{\Delta a_{mes}}{\Delta Cr}$$

umfasst.

11. Vorrichtung gemäß Anspruch 8, **dadurch gekennzeichnet, dass** das Mittel (42) zum Testen der Möglichkeit einer Erhöhung des gegenwärtigen Wertes der Getriebeübersetzung folgendes umfasst:

- einen ersten Komparator (101), dessen zweiter Eingangsanschluss mit einem Register verbunden ist, das einen Schwellenwert S_g_in beibehält, dessen Wert insbesondere beim Schritt S1 zur Initialisierung des erfindungsgemäßen Verfahrens berechnet werden kann;

- einen zweiten Komparator (103), dessen zweiter Eingangsanschluss mit dem Ausgangsleseanschluss eines Registers (102) verbunden ist, in welchem ein Schwellenwert S_Pe_in gespeichert ist, der bei dem Schritt (S1) zur Initialisierung des erfindungsgemäßen Verfahrens kalibriert werden kann, wobei der Ausgangsanschluss des Komparators (103) zum aktiven Wert übergeht, wenn der Wert der Steigung größer ist als der Steigungsschwellenwert, der als um einige Prozent positiv ausgewählt wird;

- ein UND-Gatter (104), das mit dem ersten (101) und dem zweiten (103) Komparator verbunden ist;

- der Ausgangsanschluss des UND-Gatters (104) ist mit einem ersten Einganganschluss eines ODER-Gatters (113) verbunden;

- einen dritten Komparator (108), dessen zweiter Eingangsanschluss mit einem Register (109) verbunden ist, das einen Wert S_g_out beibehält, der ein Schwellenwert ist, welcher insbesondere bei dem Schritt der Initialisierung (S1) des erfindungsgemäßen Verfahrens kalibriert werden kann, so dass der Ausgangsanschluss des Komparators (108) in den Aktivzustand übergeht, wenn der Schätzwert der Beschleunigung bei der Übersetzung R+1 den Wert S_g_out überschreitet;

- einen vierten Komparator (110), dessen zweiter Eingangsanschluss mit einem Register (111) verbunden ist, in welchem ein Schwellenwert S_Pe_out eingetragen oder gespeichert ist, der ein Schwellenwert ist, der insbesondere bei dem Schritt der Initialisierung (S1) des erfindungsgemäßen Verfahrens kalibriert werden kann, so dass der Ausgangsanschluss des vierten Komparators (110) in den Aktivzustand übergeht, wenn der gemessene Steigungswert Pe geringer wird als der Schwellenwert S_Pe_out des Registers (111);

- ein ODER-Gatter (112), welches mit dem dritten (108) und dem vierten (110) Komparator verbunden ist;

- ein ODER-Gatter (112), welches mit den Ausgängen des UND-Gatters (104) und ODER-Gatters (112) verbunden ist, so dass der Ausgangsanschluss des ODER-Gatters (113) das logische Signal OK_Steigung ausgibt, welches die Erlaubnis der Inkrementierung der Übersetzung des Getriebes anzeigt.

**12.** Verfahren gemäß Anspruch 8, **dadurch gekennzeichnet, dass** der Schätzer der Dekrementierung der Getriebeübersetzung als eine Übersetzung bzw. ein Gang des Getriebes (48) folgendes umfasst:

- Mittel zur Eingabe eines Zustandsvektors (120), welcher den gegenwärtigen Wert des Steigungswinkels Pe umfasst, den Messwert des Senkungswinkels des Gaspedals (AP) und den Messwert der Fahrzeuggeschwindigkeit Vv;

- einen ersten Komparator (122), bei welchem ein zweiter Eingangsanschluss mit dem Leseausgang eines Registers (121) verbunden ist, das einen kalibrierbaren Schwellenwert (S_Pe) enthält, und welcher in den Aktivzustand übergeht, wenn der Steigungswert (Pe) größer als der Schwellenwert S_Pe ist;

- ein Modul (124) zur Berechnung des Absolutwertes der Veränderungsgeschwindigkeit des Senkungswinkels;

- einen zweiten Komparator (127), dessen zweiter Eingang mit dem Leseausgang eines Registers (125) eines Schwellenwertes (S_P stabil) verbunden ist, der insbesondere beim Schritt (S1) der Initialisierung des erfindungsgemäßen Verfahrens kalibriert werden kann, und der in den Aktivzustand übergeht, wenn der Absolutwert der Veränderungsgeschwindigkeit des Senkungswinkels oder - grades des Gaspedals geringer als der Stabilitätsschwellenwert S_P_stabil ist;

- ein UND-Gatter (128), welches mit dem ersten (122) und dem zweiten (127) Komparator verbunden ist;

- ein zweites UND-Gatter (129), welches mit dem ersten UND-Gatter (128) und einer booleschen Variable verbunden ist, die den Zustand des Bremssystems anzeigt;

- ein Register (131) zum Schreiben des Maximalwertes der Fahrzeuggeschwindigkeit (Vmax), dessen einer Steuerungsanschluss mit dem Ausgangsanschluss des zweiten UND-Gatters (129) verbunden ist;

- einen dritten Komparator (130), bei welchem ein erster Eingangsanschluss den Messwert des Fortbewegungsgeschwindigkeitsvektors des Fahrzeuges Vv empfängt, so dass, wenn der Wert des Geschwindigkeitsvektors geringer ist als der gespeicherte Wert Vmax und das zweite UND-Gatter (129) aktiv ist, der neue Wert der Maximalgeschwindigkeit im Register (131) gespeichert wird und so dass, im entgegengesetzten Fall, die Geschwindigkeit konstant bleibt;

- einen Subtrahierer (132), dessen Ausgangsanschluss die Größe Vmax-Vv darstellt;

- einen vierten Komparator (135), dessen Eingangsanschlüsse mit dem Subtrahierer (132) und einem Register (133) des Lesewertes eines Schwellenwertes S_Vv verbunden sind, der insbesondere beim Schritt (S1) der Initialisierung des erfindungsgemäßen Verfahrens kalibrierbar ist; und

- eine Dekrementierungsschaltung (137), bei welcher ein erster Eingangsanschluss mit dem Ausgangsanschluss des vierten Komparators (135) verbunden ist und ein zweiter Eingangsanschluss mit dem Leseausgang eines Registers (136) verbunden ist, das einen Wert beibehält, der für die Dekrementierung der Übersetzung des Getriebes repräsentativ ist, und durch einen Ausgangsanschluss der Dekrementierungsschaltung (137) aktualisiert wird, der mit dem Eingangsleseanschluss des Registers (136) verbunden ist, um dieses zu aktualisieren, wobei ein Ausgangsleseanschluss (138) das Signal zur Verfügung stellt, das für den repräsentativen Wert der Dekrementierung der Übersetzung des Getriebes repräsentativ ist.

Fig. 1

Fig. 2

S1 — Début

G2

S2 — Acquérir Cm; R,

G1

Acquérir R,$V_v$, Cm, angle_ped
— S5

S3 — Est_acc (R+1)

Estimer décrément rapport

S4

O — Test montée rapp. — N

S6

ET — S8

S7

G3

Générer incrément R à R+1

Générer descente rapport — S9

O — Boucle — N

S10

Fin — S11

**Fig. 3**

UCM — 40    44

Cnot    TA    45    Capt Vv — 46

R    Capt angle_ped

41 — EST$_{R+1}$    Vv    47

α(R+1) est    AP    MEM

?    OU    Vv ant

42 — Test OK_montée    R-p

NON

OK_montée    ET — 49    48

OUI

ET — 43

Rien ou R+1    R-p ou rien

SR

R suivant

**Fig. 4**

Fig. 5

Fig. 6

Fig. 7

état

ti — 90

Cm

$a_{mes}$

ti → 91    92    ti-1 → 96    97 ← ti

R

k() — 94

93    98

X

99

95

Mest

**Fig. 8**

a(R+1)　　　　Pe

106　　　　107　　　　117　　　　116

100　　　　102　　　　104　　　　111

| S_g_in | | S_Pe_in | | S_g_out | | S_Pe_out |

103

101 ⎯ ≤ 　　　> 　　　> 　　　≤ ⎯ 110

108

ET ⎯104　　　　OU ⎯112

105

Fig. 9

OU ⎯113

OK montée

a(R+1)

S_g_out ⎯⎯⎯⎯⎯⎯⎯⎯⎯ 115

S_g_in ⎯⎯⎯⎯⎯⎯⎯⎯ 114
0

Fig. 10

**Fig. 11**